# EUROPÄISCHE PATENTSCHRIFT

(11) **EP 4 643 730 B1**
(45) Veröffentlichungstag und Bekanntmachung des Hinweises auf die Patenterteilung: **28.10.2026**
(21) Anmeldenummer: 24173768.3
(22) Anmeldetag: 02.05.2024
(51) Int. Cl.: A47J 36/34, A47J 43/07, A47J 47/16

(54) **KÜCHENGERÄT MIT KIPPSICHERUNG**
KITCHEN APPLIANCE WITH ANTI-TILT SAFETY
APPAREIL DE CUISINE AVEC SÉCURITÉ ANTI-BASCULEMENT

(43) Veröffentlichungstag der Anmeldung: 05.11.2025
(73) Patentinhaber: Vorwerk & Co. Interholding GmbH, 42275 Wuppertal (DE)
(72) Erfinder: VAHLDIEK, Utz, 58332 Schwelm (DE); ZABBACK, Iris, 42289 Wuppertal (DE); THIES, Felix, 31303 Burgdorf (DE); BUSSMANN, Lukas, 45721 Haltern am See (DE)
(74) Vertreter: Gille Hrabal Partnerschaftsgesellschaft mbB Patentanwälte

(56) Entgegenhaltungen:
- EP-A1- 4 272 614
- EP-B1- 3 964 109
- CN-A- 105 105 644
- CN-A- 109 496 134
- CN-U- 209 391 756
- DE-B4- 102018 104 053
- DE-U1- 202015 101 626

## Beschreibung

Die Erfindung betrifft ein Küchengerät. Ein Küchengerät ist ein Gerät, welches in einer Küche eines privaten Haushaltes oder in der Küche eines Gastronomiebetriebes verwendet wird. Ein Küchengerät im Sinne der vorliegenden Erfindung ist ein Gerät, mit dessen Hilfe ein Nahrungsmittel zubereitet werden kann und soll. Die Zubereitung kann ein Erhitzen, Kühlen, Zerkleinern, Mischen und/oder Wiegen des Nahrungsmittels umfassen.

Ein Küchengerät soll nicht leicht kippen oder sogar umkippen können. Kippt ein Küchengerät aufgrund einer äußeren Krafteinwirkung, so soll diese Kippbewegung so aufgefangen werden, dass das Küchengerät nicht vollständig kippt. Außerdem soll vermieden werden, dass das Küchengerät durch eine Kippbewegung beschädigt wird.

Diese chinesische Patentanmeldung CN 105105644 A betrifft einen Sockel für Küchengeräte mit Klappdeckel, wie beispielsweise Reiskocher oder elektrische Schnellkochtöpfe. Bei solchen Geräten kann der Deckel beim Öffnen um mehr als 90 Grad nach hinten kippen, wodurch sich der Schwerpunkt des gesamten Geräts nach hinten verlagert. Dies kann dazu führen, dass das Gerät umkippt, insbesondere wenn der Topf leer ist oder aus dem Sockel entnommen wurde. Es ist daher ein zusätzlicher Kippschutzfuß vorgesehen, der an der Unterseite des Sockels angebracht ist, und zwar unterhalb des Scharniers des Klappdeckels. Dieser Kippschutzfuß ist so positioniert, dass sein Abstand zur Mittelachse des Sockels größer oder gleich dem Abstand der regulären Stützfüße zur Mittelachse ist. Dadurch wird der Kippschutzfuß näher am Rand des Sockels oder zumindest gleich weit entfernt wie die anderen Stützfüße platziert.

Diese chinesische Gebrauchsmusteranmeldung CN 209391756 U beschreibt einen Küchenzerkleinerer (Mixer/Küchenmaschine) mit einer Kippschutzvorrichtung. Der Küchenzerkleinerer umfasst einen Maschinensockel, einen auf dem Sockel angeordneten Mixbecher und einen auf dem Mixbecher montierten Deckel. Um den Mixbecher herum ist eine Schallschutzhaube angeordnet, die zumindest teilweise am Maschinensockel befestigt ist. Am Boden des Maschinensockels ist ein Kippschutz-Stützelement vorgesehen.

Das deutsche Patent DE 102018104053 B4 beschreibt eine Küchenmaschine mit einer Verschiebehilfe, die das Gleiten des Geräts auf einer ebenen Unterlage wie einer Küchenarbeitsplatte ermöglicht. Die Küchenmaschine verfügt über Standfüße, die im normalen Gebrauch einen sicheren Stand gewährleisten und ein Verrutschen verhindern. Um die Position der Maschine zu ändern, ohne sie vollständig anheben zu müssen, ist eine Verschiebehilfe vorgesehen.

Das deutsche Gebrauchsmuster DE 202015101626 U1 beschreibt eine Getränkezubereitungsvorrichtung mit einem Mechanismus zum erleichterten Verschieben auf einer Arbeitsfläche. Die Vorrichtung umfasst ein Gehäuse mit einer Vorderseite (mit Getränkeauslass), einer Unterseite und mehreren Standfüßen, die eine Aufstellebene definieren. Es ist mindestens ein zusätzlicher Gleitfuß mit einer Gleitfläche vorhanden, die im normalen Betriebszustand sowohl von der Gehäuseunterseite als auch von der Aufstellebene beabstandet ist.

Es ist Aufgabe der Erfindung, ein Küchengerät weiterzuentwickeln. Insbesondere sollen ein oder mehrere der vorgenannten Ziele erreicht werden.

Die Aufgabe wird durch ein Küchengerät mit den Merkmalen des ersten Anspruchs gelöst. Die abhängigen Ansprüche betreffen vorteilhafte Ausgestaltungen.

Das Küchengerät weist zur Lösung der Aufgabe einen Boden auf. An der Unterseite des Bodens sind erste Füße für ein Aufstellen des Küchengeräts auf einen ebenen Untergrund vorhanden. Die ersten Füße enden in einer Ebene unterhalb des Bodens. Die Ebene stimmt mit dem ebenen Untergrund überein, wenn das Küchengerät auf dem ebenen Untergrund auf den ersten Füßen abgestellt ist.

An der Unterseite des Bodens sind mehrere zweite Füße für ein Abstützen eines gekippten Zustands des Küchengeräts vorhanden. Die mehreren zweiten Füße enden vor der ersten Ebene.

Eine Kippbewegung kann dann zur Folge haben, dass das Küchengerät nicht vollständig kippt. Eine entsprechende Kippbewegung kann stattdessen durch einen zweiten Fuß abgefangen werden. Durch das Abfangen steht das Küchengerät dann auf zumindest einem zweiten Fuß und zumindest zwei ersten Füßen auf.

Mit anderen Worten: Enden die ein oder mehreren zweiten Füße vor der ersten Ebene, dann berühren die zweiten Füße den ebenen Untergrund nicht, wenn das Küchengerät mit seinen ersten Füßen auf dem ebenen Untergrund abgestellt ist. Es ist aber möglich, das Küchengerät so zu kippen, dass schließlich zumindest ein zweiter Fuß den ebenen Untergrund berührt, um das Küchengerät vor einem vollständigen Kippen und Beschädigungen zu bewahren. Berührt schließlich ein zweiter Fuß durch ein Kippen den Untergrund, so kann das Küchengerät auf zumindest zwei ersten Füßen und einem zweiten Fuß stehen. Vorteilhaft steht dann das Küchengerät auf genau drei Füßen und steht damit zuverlässig wackelfrei auf dem Untergrund. Die drei Füße befinden sich dann nicht auf einer geraden Linie und schützen das Gehäuse vor Beschädigungen. Es kann aber auch sein, dass zwar ein zweiter Fuß durch das Kippen auf einem Untergrund aufsteht, sämtliche erste Füße aber den Untergrund dann nicht mehr berühren. Eine solche Konstruktion ist aber weniger zu bevorzugen, weil dann Teile des Gehäuses zerkratzt werden können.

Mit Boden ist die Wandung gemeint, die die Unterseite des Küchengeräts bildet, wenn das Küchengerät bestimmungsgemäß auf einem ebenen Untergrund aufgestellt ist. Der Boden kann eine ebene Außenseite bzw. eine ebene Oberfläche umfassen. Der Boden kann nach innen bzw. nach oben gewölbt sein, um beispielsweise eine Griffmulde bereitzustellen. Die Griffmulde kann beispielsweise randseitig vorhanden sein, um die Griffmulde auch im aufgestellten Zustand des Küchengeräts erreichen zu können. Die Oberfläche bzw. Außenseite des Bodens kann zumindest überwiegend geschlossen sein, um einen Innenraum des Küchengeräts beispielsweise vor Staub und Flüssigkeit zu schützen. Der Boden kann Teil eines Gehäuses des Küchengeräts sein. Das Gehäuse des Küchengeräts kann an seiner Oberseite vollständig geschlossen sein, um den Innenraum des Gehäuses des Küchengeräts vor Staub und Flüssigkeit zu schützen.

Wird das Küchengerät auf einem ebenen Untergrund aufgestellt, so kontaktieren die ersten Füße den ebenen Untergrund. Es gibt dann einen Abstand zwischen dem ebenen Untergrund und dem Boden des Küchengeräts, der den Boden vor Beschädigungen schützen kann.

Die ersten Füße können vertieft positioniert sein. Damit ist gemeint, dass die ersten Füße in einer Mulde bzw. Ausnehmung eingelassen sein können bzw. hineinreichen können. Eine solche Mulde bzw. Ausnehmung ist in Aufsicht auf die Unterseite des Bodens sichtbar. Eine solche Mulde kann so sein, dass diese zugleich als Griffmulde dienen kann. Durch die vertiefte Positionierung kann der Schwerpunkt etwas nach unten wandern, was einem Kippen entgegenwirkt.

Die Aufstellfläche eines jeden Fußes ist klein im Vergleich zur Fläche des Bodens. Mit Aufstellfläche ist die Fläche des Fußes gemeint, die den ebenen Untergrund kontaktiert, wenn das Küchengerät auf dem ebenen Untergrund wie vorgesehen auf dem Fuß aufgestellt ist.

Ein Fuß oder ein Teil eines Fußes kann mit dem Boden einstückig verbunden sein. Der Boden kann also zusammen mit einem Fuß oder einem Teil eines Fußes in einem Arbeitsschritt beispielsweise durch Spritzgießen gefertigt worden sein. Ist ein Fuß mit dem Boden einstückig verbunden, so ist ein Boden nicht getrennt von einem Fuß hergestellt worden. Dies schließt nicht aus, dass der Boden mehrere Teile umfassen kann, so zum Beispiel eine Abdeckung oder Kappe. Auch der Fuß kann aus mehr als einem Teil bestehen und beispielsweise neben einem Gehäuse einen Drucksenor umfassen. Ein Fuß kann aus nur einem Teil bestehen, also in einem Stück gefertigt worden sein. Der Boden kann aus nur einem Teil bestehen, also in einem Stück gefertigt worden sein.

Ein jeder Fuß kann getrennt von dem Boden in einem Arbeitsschritt oder in mehreren Arbeitsschritten hergestellt worden sein. Nach der Herstellung kann ein jeder Fuß beispielsweise mit dem Boden des Küchengeräts oder mit einer anderen Seite bzw. Wandung des Küchengeräts stoffschlüssig, kraftschlüssig und/oder formschlüssig verbunden worden sein. Ein Fuß kann mit dem Boden des Küchengeräts stoffschlüssig verbunden worden sein, indem der Fuß mit dem Boden des Küchengeräts durch Kleben oder Schweißen verbunden worden ist. Ein Fuß kann mit dem Boden des Küchengeräts kraftschlüssig verbunden worden sein, indem der Fuß in einer Ausnehmung im Boden eingeklemmt worden ist und also klemmend innerhalb der Ausnehmung gehalten wird. Ein Fuß kann mit dem Boden des Küchengeräts formschlüssig verbunden worden sein, indem der Fuß mit dem Boden des Küchengeräts durch Verschrauben oder durch einen Bajonettverschluss verbunden worden ist. Ein Fuß kann mit dem Boden des Küchengeräts formschlüssig verbunden worden sein, indem der Fuß mit dem Boden des Küchengeräts verrastet worden ist.

Ein Fuß kann durch eine Stange oder einen anderen langgestreckten Gegenstand bereitgestellt sein. Ein Ende der Stange bzw. ein stirnseitiges Ende des anderen langgestreckten Gegenstands kann dann eine Aufstellfläche sein. Ein Fuß kann eine Noppe sein, also eine höckerartige Erhebung auf einer Oberfläche. Ein Fuß kann plattenförmig bzw. ein Plättchen sein. Ein Fuß kann aus einem Teil oder aus mehr als einem Teil gebildet sein. Eine Grundfläche eines Fußes kann beispielsweise oval, kreisrund, dreieckig, rechteckig oder quadratisch sein. Die Grundfläche des Fußes kann mit dem Boden oder mit einer anderen Wandung verbunden sein. Ein Fuß kann sich zur Ebene hin verjüngen, so zum Beispiel ausgehend von der vorgenannten Grundfläche.

Die ersten Füße, beispielsweise als Füße dienende ein oder mehrere erste Noppen, können beim Rand des Bodens angeordnet sein. Erste Füße können dann untereinander einen besonders großen Abstand aufweisen, was die Standsicherheit verbessern kann.

Die ein oder mehreren zweiten Füße, beispielsweise als Füße dienende ein oder mehrere zweite Noppen, können beim Rand des Bodens angeordnet sein, um die Standsicherheit verbessern zu können.

Die ersten und/oder die zweiten Füße können entlang einer bogenförmigen Linie angeordnet sein, um für Standsicherheit sorgen zu können. Die bogenförmige Linie kann wie ein U oder zumindest näherungsweise wie ein U geformt sein. Ein jeder Schenkel der U-förmigen Linie kann einen ersten Fuß aufweisen. Vorzugsweise weist ein jeder Schenkel der U-förmigen Linie genau einen ersten Fuß auf. Ein erster Fuß kann sich im Grund der U-Form befinden. Es können genau drei erste Füße vorhanden sein, um ein wackelfreies Aufstellen zu gewährleisten. Zwischen zwei ersten Füßen ist ein zweiter Fuß vorgesehen. Der zweite Fuß kann einen ähnlich großen Abstand zu den beiden benachbarten ersten Füßen aufweisen. Es können genau zwei zweite Füße vorhanden sein. Diese Ausgestaltungen können einzeln oder in Kombination zur Verbesserung der Standsicherheit beitragen.

Es können aber auch mehr als drei erste Füße vorhanden sein, so zum Beispiel vier oder fünf erste Füße.

Die ersten und die zweiten Füße, beispielsweise Noppen, sind entlang eines bogenförmigen Rands des Bodens oder parallel zu einem bogenförmigen Rand des Bodens angeordnet.

Der bogenförmige Rand kann U-förmig oder zumindest näherungsweise U-förmig sein. Die vorgenannte bogenförmige bzw. U-förmige Linie kann also der Rand des Bodens sein oder unmittelbar an den Rand angrenzen. Ein zweiter Fuß bzw. eine zweite Noppe kann so mit zwei benachbarten ersten Füßen bzw. zwei benachbarten ersten Noppen in Aufsicht auf den Boden gesehen ein Dreieck bilden, um auch im Fall eines Kippens für Standsicherheit sorgen zu können.

Ein oder mehrere zweite Füße können nach außen geneigt verlaufen, um verbessert das Küchengerät vor einem Kippen schützen zu können. Ein oder mehrere zweite Füße bzw. ein oder mehrere zweite Noppen können beispielsweise vom Boden des Küchengeräts schräg nach außen abstehen, um verbessert und stabil das Küchengerät vor einem vollständigen Kippen schützen zu können.

Ein oder mehrere zweite Füße können eine langgestreckte Aufstellfläche am freien, unteren Ende aufweisen, die in Aufsicht auf den Boden gesehen von innen nach außen verläuft. Die langgestreckte Aufstellfläche kann beispielsweise mit dem Rand des Bodens einen senkrechten Winkel einschließen. Die langgestreckte Aufstellfläche setzt auf einem Untergrund auf, wenn das Küchengerät entsprechend gekippt wird. Durch diese langgestreckte Form der Aufstellfläche kann verbessert ein Küchengerät gegen ein Kippen gesichert werden. Eine langgestreckte Aufstellfläche kann oval und dadurch langgestreckt sein. Eine Aufstellfläche kann ein Rechteck und damit langgestreckt sein.

Ein oder mehrere zweite Füße können sich vom Boden aus gesehen nach außen verjüngen, um Stöße im Fall einer Kippbewegung verbessert federnd abfangen zu können. Die Aufstellfläche des zweiten Fußes, die im Fall einer Kippbewegung den Untergrund kontaktieren kann, ist dann kleiner als der Querschnitt des Fußes oberhalb der Aufstellfläche und auch kleiner als die genannte Grundfläche. Die Aufstellfläche kann oval geformt sein, damit Ecken vermieden werden, die einen Untergrund mit erhöhtem Risiko beschädigen können.

Die ersten Füße bzw. die ersten Noppen können vom Boden des Küchengeräts senkrecht nach unten abstehen, um stabil für Standsicherheit zu sorgen.

Um ein vollständiges Kippen zuverlässig vermeiden zu können, können erste und zweite Füße so angeordnet sein, dass das Küchengerät um maximal 25° gekippt worden ist, wenn das Küchengerät auf zumindest einem zweiten Fuß und zumindest auf zwei ersten Füßen aufsteht. Eine ebener Bereich des Bodens kann dann mit einem ebenen Untergrund einen Winkel von nicht mehr als 25° einschließen.

Der Schwerpunkt des Küchengeräts kann sich zur Verbesserung der Standsicherheit zumindest näherungsweise mittig zwischen den ersten Noppen befinden.

Der Boden des Küchengeräts weist eine langgestreckte Form mit zwei langen Seiten und im Vergleich dazu zwei schmalen Stirnseiten auf. Das Küchengerät wird bei einer solchen lang gestreckten Form des Bodens kaum in Richtung einer Stirnseite umkippen können. Es kann insbesondere bei einer solchen langgestreckten Form daher genügen, zweite Füße nur so anzuordnen, dass diese ein Kippen in Richtung lange Seite auffangen können. Zweite Füße können deshalb beispielsweise nur bei den langen Seiten vorgesehen sein oder nur zu Beginn eines bogenförmigen Verlaufs einer Stirnseite.

Ein Bedienfeld des Küchengeräts ist bei einer schmalen Stirnseite angeordnet. Ein übermäßiger Druck auf das Bedienfeld kann dann kaum zur Folge haben, dass das Küchengerät umkippt. Ein Bedienfeld umfasst ein oder mehrere Einrichtungen, über die das Küchengerät bedient werden kann. Eine solche Einrichtung kann ein berührungsempfindliches Display sein. Eine Einrichtung kann ein Schalter sein, über den das Küchengerät bedient werden kann. Eine Einrichtung kann ein Drehknopf und/oder Druckknopf sein, über den das Küchengerät bedient werden kann.

Das Bedienfeld kann mit der genannten Ebene einen Winkel kleiner als 90° einschließen, um leicht erreichbar zu sein. Ein übermäßiger Druck auf das Bedienfeld kann dann zwar ein Drehmoment in das Küchengerät einleiten. Ist das Bedienfeld aber bei einer schmalen Stirnseite angeordnet, so kann das Küchengerät dennoch kaum umkippen.

Die schmale Stirnseite, bei der das Bedienfeld angeordnet ist, verläuft geradlinig, um eine Kippbewegung stabil abfangen zu können. Die schmale Stirnseite, bei der das Bedienfeld angeordnet ist, schließt mit einer langen Seite einen rechten Winkel ein, um weiter verbessert eine Kippbewegung stabil abfangen zu können.

Der Schwerpunkt des Küchengeräts kann vom Bedienfeld aus gesehen in der hinteren Hälfte des Bodens oder im hinteren Drittel des Bodens vorhanden sein, wobei dann die Lage des Schwerpunkts in einer Aufsicht auf das Küchengerät gesehen gemeint ist. Insbesondere dann kann ein Druck auf das Bedienfeld in der Praxis kaum zur Folge haben, dass eine Kippbewegung stattfindet.

Es kann ein Drucksensor für eine Gewichtsmessung vorhanden sein. In einem ersten Fuß kann der Drucksensor integriert sein. Im jeden ersten Fuß kann ein Drucksensor integriert sein. Ein erster Fuß kann mit einem Drucksensor verbunden sein. Ein jeder erster Fuß kann mit einem Drucksensor verbunden sein. Alle ersten Füße können mit einem einzigen Drucksensor verbunden sein. Durch die ein oder mehreren Drucksensoren kann ein Gewicht gemessen werden. Die ein oder mehreren Drucksensoren können verwendet werden, um beispielsweise das Gewicht von Nahrungsmitteln wiegen zu können. Das Küchengerät kann also eine Waage sein oder eine Waage umfassen. Ein erster Fuß ist dann so gestaltet, dass ein Druck auf die Oberseite des Küchengeräts durch einen Drucksensor in einen Messwert umgewandelt werden kann. Mithilfe der ein oder mehreren erzeugten Messwerte kann das Gewicht eines Nahrungsmittels bestimmt werden, wenn das Nahrungsmittel auf das Küchengerät aufgelegt worden ist. Das Küchengerät kann eine Steuerelektronik umfassen, mit der das Gewicht eines aufgelegten Nahrungsmittels aus ein oder mehreren Messwerten bestimmt werden kann.

Zweite Füße umfassen grundsätzlich keinen Gewichtssensor, da diese nicht für ein Wiegen vorgesehen sind. Mithilfe von zweiten Füßen sind also grundsätzlich keine Druckmessungen möglich. Zweite Füße sind so angeordnet, dass diese im Normalbetrieb ein Wiegen durch erste Füße nicht beeinflussen können, da zweite Füße im Normalbetrieb eine Aufstellfläche nicht berühren.

Ein erster Fuß kann rutschhemmend im Vergleich zu einem anderen ersten Fuß sein. Der andere Fuß wird nachfolgend Gleitfuß genannt. Das Küchengerät kann dann so an einer Seite angehoben werden, dass sich der rutschhemmende Fuß von dem Untergrund löst. Das Küchengerät kann anschließend mit relativ geringer Kraft entlang des ebenen Untergrunds verschoben werden. Der Ort der Aufstellung des Küchengeräts kann so leicht verändert werden. Auch dann können zweite Füße einem Kippen entgegenwirken.

Ein Benutzer wird das Küchengerät so aufstellen wollen, dass das Bedienfeld leicht erreichbar ist. Für ein Verschieben des Küchengeräts mittels Gleitfuß wird ein Benutzer daher die Seite des Bodens ergreifen wollen, bei der sich das Bedienfeld befindet. Es ist nun günstig, dass sich der Schwerpunkt vom Bedienfeld aus sowie in Aufsicht auf das Küchengerät gesehen im hinteren Bereich des Küchengeräts befindet, um das Küchengerät mit geringer Kraft anheben zu können. Auch trägt ein Schwerpunkt im hinteren Bereich des Küchengeräts (also in der hinteren Hälfte) dazu bei, dass das Küchengerät an der Seite mit dem Bedienfeld kippsicher angehoben werden kann. Mit hinterem Bereich ist die hintere Hälfte des Küchengeräts gemeint. Günstig ist es dann auch, dass der Gleitfuß vom Bedienfeld aus gesehen hinter dem Schwerpunkt angeordnet ist.

Die rutschhemmende Eigenschaft eines ersten Fußes kann auf einer neigbaren Oberfläche ermittelt werden. Ein Gerät kann beispielsweise zu Prüfzwecken drei rutschhemmende Füße aufweisen und ein anderes Gerät kann zu Prüfzwecken drei Gleitfüße aufweisen. Die beiden Geräte unterscheiden sich dann nur durch die rutschhemmenden Eigenschaften der ersten Füße. Beide Geräte können zu Prüfzwecken auf die neigbare Oberfläche gestellt werden. Die neigbare Oberfläche kann ausgehend von einer geringen Neigung zunehmend stärker geneigt werden. Das Gerät mit den rutschhemmenden Füßen wird dann später, also einer erst bei einer stärkeren Neigung, herunterrutschen im Vergleich zu dem Gerät mit den Gleitfüßen.

Eine rutschhemmende Aufstellfläche eines rutschhemmenden Fußes kann aus einem rutschhemmendem Material gebildet sein wie zum Beispiel einem Elastomer oder einem anderen Kunststoff mit hohen Reibungskoeffizienten im Vergleich zu Reibungskoeffizienten von POM oder PE-UHMW. Eine im Vergleich dazu nicht rutschhemmende Aufstellfläche eines Gleitfußes kann aus einem leicht gleitenden Material wie zum Beispiel POM, glasfasergefülltes POM wie POM-GF26 oder PE-UHMW gebildet sein.

Ein Material mit niedrigem Reibwert bzw. niedrigem Reibungskoeffizienten wie die beispielhaft genannten Materialien erzeugen praktisch keine Kratzer auf einer Oberfläche.

MIT POM ist ein Polyoxymethylen gemeint. Es handelt sich um einen hochmolekularen thermoplastischen Kunststoff mit hoher Steifigkeit und einem niedrigen Reibungskoeffizienten, der durch Spritzgießen in eine gewünschte Form gebracht werden kann. Der erste Fuß oder ein Teil des ersten Fußes kann dann also im Spritzgussverfahren hergestellt werden.

PE-UHMW meint ein ultrahochmolekulares Polyethylen. Ein ultrahochmolekulares Polyethylen weist ebenfalls gute Gleiteigenschaften auf und kann durch Spritzguß verarbeitet werden.

Eine rutschhemmende Aufstellfläche eines rutschhemmenden Fußes kann aus einem härteren Material bestehenden als das Material, aus dem eine im Vergleich dazu nicht rutschhemmende Aufstellfläche eines Gleitfußes gebildet ist. Kratzer auf einer Oberfläche können bei einem Verschieben so verbessert vermieden werden. Härte ist der mechanische Widerstand eines Werkstoffes (Prüfstückes) gegen das mechanische Eindringen eines anderen härteren Körpers (Eindringkörper).

Eine rutschhemmende Aufstellfläche eines rutschhemmenden Fußes kann eine größere Oberflächenrauigkeit aufweisen als eine nicht rutschhemmende Aufstellfläche eines Gleitfußes. Mit Aufstellfläche ist die Fläche des Fußes gemeint, die einen ebenen Untergrund kontaktiert, wenn das Küchengerät auf einem ebenen Untergrund auf dem Fuß aufgestellt ist. Eine Aufstellfläche eines jeden Fußes ist klein im Vergleich zur Fläche des Bodens.

Ein Gleitfuß kann einen anderen Formfaktor, also beispielsweise eine andere Größe und/oder eine andere Form, im Vergleich zu einem rutschhemmenden Fuß haben, um dadurch seine Rutscheigenschaften im Vergleich zum rutschhemmenden Fuß zu verbessern.

Ein jeder erster Fuß kann ein oder mehrere gleich geformte Teile mit gleichen Maßen aufweisen, damit Teile von Füßen gegeneinander getauscht werden können. Eine jeder erster Fuß kann beispielsweise eine gleich geformte und gleich große Kappe aufweisen. Eine Kappe kann so sein, dass ein erster Fuß mit einer solchen Kappe ein rutschhemmender Fuß ist. Eine andere Kappe kann so sein, dass ein erster Fuß mit dieser Kappe ein Gleitfuß ist. Durch Austausch von Kappen kann dann die rutschhemmende Eigenschaft eines ersten Fußes geändert werden. Der technische Herstellungsaufwand kann so geringgehalten werden.

Eine Kappe kann durch Formschluss und/oder Kraftschluss befestigt sein. Eine Kappe kann durch Formschluss und/oder Kraftschluss lösbar befestigt sein und kann dann also ohne Zerstörung gelöst werden.

Es ist aber auch möglich, dass eine Kappe nicht austauschbar ist und dann nur durch Zerstörung gelöst werden kann. Eine solche Kappe kann durch Stoffschluss befestigt sein. Eine solche Kappe kann beispielsweise angespritzt worden sein.

Ein Fuß oder eine Kappe des Fußes können so sein, dass dieser Fuß bzw. diese Kappe kein Saugnapf ist. Es handelt sich dann also nicht um ein Befestigungsmittel, das sich mittels Unterdruck an einer glatten Oberfläche festsaugen kann. Es kann aber sein, dass ein rutschhemmender Fuß als Saugnapf ausgebildet ist.

Der Boden des Küchengeräts kann eine Griffmulde umfassen, um das Küchengerät sicher tragen zu können. Die Griffmulde kann Lüftungsöffnungen umfassen, damit Lüftungsöffnungen einen vergleichsweise großen Abstand zum Untergrund aufweisen können, um so zuverlässig arbeiten zu können. Lüftungsöffnungen können an der Unterseite des Küchengeräts angeordnet sein, damit Flüssigkeit in der Praxis nicht in das Innere des Küchengeräts eindringen kann. Füße können zumindest teilweise mit der Griffmulde überlappen, um Randbereiche des Bodens in mehrfacher Hinsicht vorteilhaft ausnutzen zu können. Erste und/oder zweite Füße können näher am Rand des Bodens angeordnet sein als Lüftungsöffnungen und/oder als die Griffmulde, um so verhindern zu können, dass ein Stromversorgungskabel der Küchenmaschine unter den Boden des Küchengeräts gelangen kann. Dies könnte die Standsicherheit des Küchengeräts beeinträchtigen. Außerdem könnte ein Wiegeergebnis verfälscht werden, wenn die ersten Füße einen Drucksensor umfassen.

Das Küchengerät kann einen Elektromotor, ein Gefäß und ein Misch- und/oder Schneidwerkzeug im Gefäß umfassen. Das Misch- und/oder Schneidwerkzeug kann über eine Welle durch den Motor angetrieben werden.

Es zeigen:
- Figur 1:: seitliche Ansicht eines Küchengeräts;
- Figur 2:: Aufsicht auf Boden des Küchengeräts;
- Figur 3:: Schnitt durch einen Ausschnitt mit einem zweiten Noppen;
- Figur 4:: Schnitt durch einen Ausschnitt mit einem ersten Noppen;
- Figur 5:: seitliche Ansicht eines Küchengeräts;
- Figur 6:: Schnitt durch ersten Fuß mit Drucksensor.

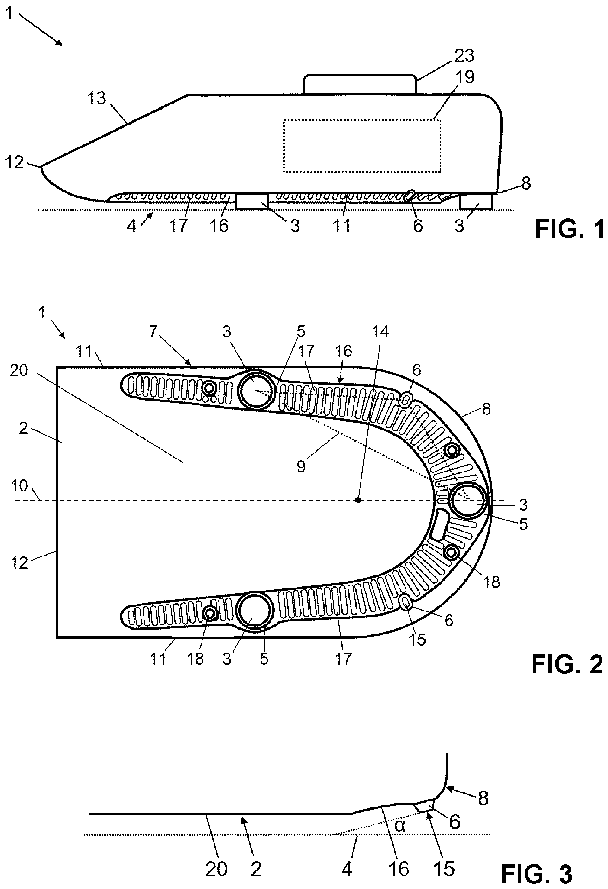

Die Figur 1 zeigt ein Küchengerät 1 in seitlicher Ansicht. Die Figur 2 zeigt eine Aufsicht auf den Boden 2 des Küchengeräts 1. Von der Unterseite des Boden 2 können erste Füße beispielsweise in Form von Noppen 3 nach unten zum Beispiel senkrecht abstehen. Drei Füße 3 sind aus Gründen der Standsicherheit zu bevorzugen. Die ersten Füße 3 können in einer Ebene 4 unterhalb des Bodens 2 enden. Im Boden 2 kann es Ausnehmungen 5 geben. Die Ausnehmungen 5 können einen kreisrunden Durchmesser haben. Die darin gehaltenen Füße 3 können zumindest abschnittsweise einen kreisrunden Durchmesser haben. Ein jeder Fuß 3 kann in eine Ausnehmung 5 des Bodens 2 hineinreichen. **In** einer Ausnehmung 5 oder hinter einer lochartigen Ausnehmung 5 kann ein Fuß 3 klemmend gehalten sein. In einer Ausnehmung 5 oder hinter einer lochartigen Ausnehmung 5 kann ein Fuß 3 eingerastet und so gehalten sein. Ein Fuß 3 kann mithilfe eines Gewindes, also beispielsweise mit ein oder mehreren Schrauben, befestigt sein.

An der Unterseite des Bodens 2 können zweite Füße beispielsweise in Form von Noppen 6 für ein Abstützen eines gekippten Zustands des Küchengeräts 1 vorhanden sein. Es können genau zwei zweite Füße 6 vorhanden sein. Die ein oder mehreren zweiten Füße 6 können, wie in der Figur 1 zu sehen, vor der Ebene 4 enden. Steht das Küchengerät 1 auf einem ebenen Untergrund mit zumindest drei ersten Füßen 3 auf, dann berühren die ein oder mehreren zweiten Füße 6 den Untergrund nicht.

Die ersten Füße 3 und/oder die zweiten Füße 6 können beim Rand 7 des Bodens 2, d. h., in der Nähe des Rands 7 angeordnet sein, wie dies in der Figur 2 zu sehen ist. Der Abstand zwischen einem Fuß 3, 6 und einem benachbarten Randbereich des Bodens 2 kann dann in Aufsicht auf den Boden 2 gesehen beispielsweise kleiner als 4 cm oder kleiner als 2 cm oder kleiner als 1 cm sein. Der Boden 2 kann, wie in der Figur 2 zu sehen ist, durch einen bogenförmigen Rand 8, also einen Bogen, an einer Stirnseite begrenzt sein. Der bogenförmige Rand 8 ist dann ein Teil des Rands 7. Erste und zweite Füße 3, 6 können entlang des bogenförmigen Rands 8 und/ oder parallel zu dem bogenförmigen Rand 8 des Bodens 2 angeordnet sein, wie dies in der Figur 2 zu sehen ist.

Ein erster Fuß 3, der beispielsweise beim Bogen 8 vorhanden sein kann, kann ein Gleitfuß sein. Die anderen ersten Füße 3 können rutschhemmende Füße sein.

Ein zweiter Fuß 6 kann sich zwischen zwei ersten Füßen 3 befinden. Es kann so erreicht werden, dass die beiden ersten Füße 3 und der zweite Fuß 6 nicht entlang einer geraden Linie angeordnet sind. Stattdessen spannen die drei Füße 3, 6 ein Dreieck 9 auf, wie dies in der Figur 2 angedeutet wird. Dadurch ist es möglich, dass das Küchengerät 1 auch im gekippten Zustand auf drei Füßen 3, 6 aufstehen kann und zwar auf zwei ersten Füßen 3 des Dreiecks 9 und dem zweiten Fuß 6 des Dreiecks 9. Das Küchengerät 1 kann dann beispielsweise um maximal 20° oder um maximal 25° oder um maximal 30° gekippt sein. Die Füße 3, 6 können spiegelsymmetrisch angeordnet sein. Die zugehörige Symmetrieachse 10 kann mittig durch den bogenförmigen Rand 8 verlaufen, wie dies in der Figur 2 angedeutet wird. Die zugehörige Symmetrieachse 10 kann mittig durch die andere Stirnseite 12 verlaufen, wie dies in der Figur 2 angedeutet wird. Dadurch kann das Küchengerät 1 in nur zwei verschiedene Kipprichtungen durch zweite Füße 6 gesichert sein.

Der Boden 2 kann langgestreckt sein, also zwei lange Seiten 11 und im Vergleich dazu zwei kurze Stirnseiten 8 und 12 aufweisen. Die Symmetrieachse 10 kann durch die beiden Stirnseiten 8 und 12 hindurchlaufen. Da die Länge des Bodens 2 entlang der Symmetrieachse 10 groß ist, kann das Risiko, dass das Küchengerät 1 aufgrund eines äußeren Stoßes in Richtung einer Stirnseite 8, 12 kippt, gering sein. Es kann vor allem dann daher genügen, dass nur zweite Füße 6 vorhanden sind, die ein Kippen in Richtung einer langen Seite 11 abfangen können. Aufgrund der sehr geringen Kippgefahr in Richtung einer Stirnseite 8, 12 kann also auf das Vorsehen von weiteren zweiten Füßen verzichtet werden, um die Zahl der Teile gering halten zu können.

Das Küchengerät kann ein Bedienfeld 13 aufweisen. Das Bedienfeld 13 kann ein beispielsweise berührungsempfindliches Display umfassen, über das das Küchengerät 1 bedient werden kann. Über das Display können Zustände des Küchengeräts 1 angezeigt werden. Über das Display können kann alternativ oder ergänzend das Küchengerät 1 gesteuert werden. Das Bedienfeld 13 kann zumindest einen Schalter umfassen, durch den das Küchengerät 1 bedient werden kann. Das Bedienfeld 13 kann, von der Oberseite auf das Küchengerät 1 gesehen, sichtbar sein. Das Bedienfeld 13 kann gegenüber einem ebenen Untergrund bzw. der Ebene 4 schräg verlaufen, um gut sichtbar und erreichbar zu sein. Der Winkel kann aus diesem Grund kleiner als 60° oder kleiner als 45° oder kleiner als 35° sein, den das Bedienfeld 13 mit der Ebene 4 einschließt. Das Bedienfeld 13 kann aus Gründen der Standsicherheit bei einer Stirnseite 8 angeordnet sein. Ein hoher Druck auf das Bedienfeld 13 kann dann unkritisch sein, weil aufgrund der langgestreckten Form des Bodens 2 eine Kippgefahr dann besonders gering sein kann.

Das Bedienfeld 13 kann sich an einer Stirnseite 12 oder unmittelbar angrenzend an eine Stirnseite 12 befinden, die geradlinig verläufen und die mit der Symmetrieachse 10 einen rechten Winkel einschließen kann. Wird das Bedienfeld 13 durch einen übermäßig hohen Druck nach unten gedrückt, dann kann die Stirnseite 12 geradlinig auf dem Untergrund aufsetzen, wodurch die Lage des Küchengeräts 1 stabilisiert werden kann.

Der Schwerpunkt 14 des Küchengeräts 1 kann von dem Bedienfeld 13 aus gesehen in der hinteren Hälfte oder im hinteren Drittel des Bodens 2 des Küchengeräts 1 sein (siehe Figur 2). Dabei ist die Lage des Schwerpunkts 14 in Aufsicht auf das Küchengerät 1 gemeint (siehe Figur 2). Dadurch wird das Risiko weiter verringert, dass ein Druck auf das Bedienfeld 13 eine Kippbewegung auslösen kann.

Die Symmetrieachse 10 kann durch den Schwerpunkt 14 hindurch laufen, wie dies in der Figur 2 zu sehen ist. Die Füße 3, 6 können um den Schwerpunkt 14 herum angeordnet sein, um für eine große Standsicherheit zu sorgen. Der Schwerpunkt 14 kann aus Gründen der Standsicherheit gleiche Abstände zu den ersten Füßen 3 aufweisen, also zu jedem ersten Fuß 3 gleich weit entfernt sein. Der Schwerpunkt 14 des Küchengeräts 1 befindet sich dann mittig zwischen den ersten Füßen 3.

Die ein oder mehreren zweiten Füße 6 können vom Boden 2 des Küchengeräts 1 schräg nach außen abstehen, wie dies der Ausschnitt der Figur 3 verdeutlicht, der einen Schnitt durch einen zweiten Fuß 6 zeigt. Die ein oder mehreren zweiten Füße 6 können eine langgestreckte Aufstellfläche 15 am freien, unteren Ende aufweisen, die in Aufsicht auf den Boden 2 gesehen von innen nach außen verlaufen kann, wie dies in den Figuren 2 und 3 gezeigt wird. Diese langgestreckte Form ist besonders geeignet, um eine Kippbewegung abfangen zu können, ohne übermäßig große zweite Füße 6 dafür vorsehen zu müssen. Die Aufstellfläche 15 kann, wie in der Figur 2 zu sehen, oval sein. Die bevorzugt langgestreckte Aufstellfläche 15 kann mit einem ebenen Untergrund bzw. der Ebene 4 einen Winkel α einschließen, der vorzugsweise so gewählt sein kann, dass die Aufstellfläche 15 durch ein Kippen in die Horizontale gebracht wird, wenn die Aufstellfläche 15 auf dem Untergrund aufsetzt. Die Aufstellfläche 15 kann dann vollflächig oder zumindest im Wesentlichen vollflächig auf dem ebenen Untergrund aufsetzen. Die zweiten Füße 6 können sich in Richtung ihrer Aufstellfläche 15 verjüngen, um verbessert federnd im Fall einer Kippbewegung auf dem Untergrund aufsetzen zu können. Stöße können so verbessert abgefedert werden. Die genannten Ausgestaltungen der Füße 6 können unabhängig voneinander die Standsicherheit verbessern.

Insbesondere die zweiten Füße 6, aber auch die ersten Füße 3, können ganz oder teilweise aus einem elastischen Material bestehen, um Stöße abfangen zu können. Insbesondere das Material eines zweiten Fußes 6 kann elastischer als das Material des Gehäuses und/oder des Bodens 2 des Küchengeräts 1 sein, um Stöße aufgrund einer Kippbewegung abfangen zu können.

Der Boden 2 kann beispielsweise randseitig nach innen bzw. nach oben gewölbt sein, um eine Griffmulde 16 bereitzustellen. Ist das Küchengerät 1 auf einem Untergrund abgestellt, dann kann die Griffmulde 16 erfasst werden, um das Küchengerät sicher anheben zu können. Die Griffmulde 16 kann sich, in Aufsicht auf das Küchengerät gesehen, um den Schwerpunkt 14 des Küchengeräts 1 herum erstrecken, um ein sicheres Anheben des Küchengeräts zu ermöglichen (siehe Figur 2). Die Griffmulde 16 kann sich, wie in der Figur 2 gezeigt, näherungsweise U-förmig um den Schwerpunkt 14 des Küchengeräts 1 herum erstrecken.

Die Griffmulde 16 kann Lüftungsöffnungen 17 umfassen, durch die hindurch ein Luftaustausch aus Kühlungsgründen möglich ist. Dieses Anordnen von Lüftungsöffnungen 17 stellt einen relativ großen Abstand zum Untergrund sicher, was sich günstig auf den angestrebten Luftaustausch und damit günstig auf eine Kühlung auswirken kann. Oberhalb des Bodens 2 können zu kühlende elektrische und/oder elektronische Einrichtungen vorhanden sein, wie zum Beispiel ein Elektromotor, mit dem beispielsweise ein Misch- und/oder Schneidwerkzeug des Küchengeräts 1 angetrieben werden kann, oder eine Steuerelektronik. Das Anordnen von Lüftungsöffnungen angrenzend an den Randbereich des Bodens 2 kann ergänzend dazu beitragen, dass ein kühlender Luftaustausch möglichst ungehindert möglich ist. Flüssigkeit kann aufgrund der Anordnung an der Unterseite nicht in das Innere des Gehäuses eindringen. Wie in der Figur 2 gezeigt, kann der Abstand zwischen einem Fuß 3, 6 und dem Rand 7 des Bodens 2 geringer sein als der Abstand zwischen benachbarten Lüftungsöffnungen 17 und dem Rand 7 des Bodens 2. Mit benachbarten Lüftungsöffnungen 17 sind die Lüftungsöffnungen gemeint, die sich in unmittelbarer Nachbarschaft eines Fußes 3, 6 befinden. Das Küchengerät 1 kann ein Stromversorgungskabel mit einem Stecker haben. Wird der Stecker in eine elektrische Steckdose gesteckt, dann kann darüber das Küchengerät 1 mit Strom versorgt werden. Die genannte Anordnung kann verhindern, dass ein solches Stromversorgungskabel unter die Griffmulde 16 gelangen kann, was den kühlenden Luftaustausch nachteilhaft beeinträchtigen könnte.

Die Füße 3, 6 können zumindest teilweise mit der Griffmulde 16 überlappen, wie dies in der Figur 2 zu sehen ist, um den Raum im Randbereich des Bodens 2 optimal nutzen zu können.

Im Bereich der Griffmulde 16 kann es Verschraubungen 18 geben, um Komponenten wie Elektromotor 19 (siehe Figur 1) im Inneren des Küchengeräts 1 zu befestigen und/oder um Teile des Gehäuses des Küchengeräts 1 miteinander zu verbinden.

Die Griffmulde 16 kann einen ebenen Bereich 20 des Bodens 2 einschließen, der also parallel zu einem ebenen Untergrund bzw. der Ebene 4 verlaufen kann, wie dies die Figuren 2 und 3 verdeutlichen.

Das Küchengerät 1 kann an seiner Oberseite eine Kupplungseinrichtung 23 umfassen, um Zubehörteile mit dem Küchengerät 1 kuppeln zu können. Ein solches Zubehörteil kann beispielsweise ein Gefäß bzw. ein Topf sein. In einem solchen Gefäß kann sich beispielsweise ein Rühr- und/oder Schneidwerkzeug befinden, das beispielsweise über den genannten Elektromotor 19 angetrieben werden kann. Das Gefäß kann einen elektrischen Heizleiter umfassen, der über das Küchengerät 1 mit Strom für ein Erhitzen versorgt werden kann.

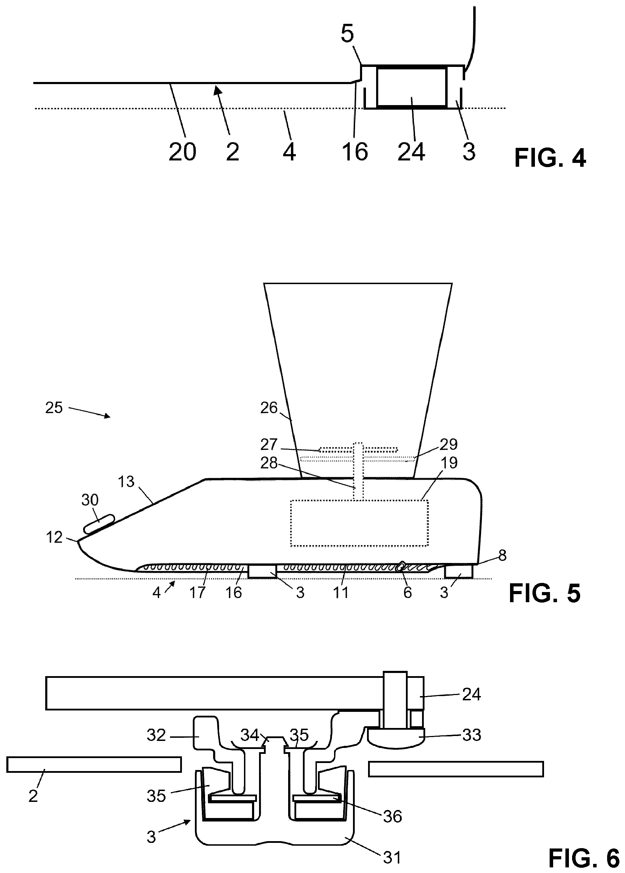

Die Figur 4 zeigt einen Schnitt durch einen Ausschnitt mit einem ersten Fuß 3, der in der Ausnehmung 5 gehalten sein kann. Der erste Fuß 3 kann sich, wie in der Figur 4 gezeigt, senkrecht nach unten erstrecken. Im ersten Fuß 3 kann ein Drucksensor 24 integriert sein. Das Küchengerät 1 kann durch ein oder mehrere in erste Füße 3 integrierte Drucksensoren 24 eine Waage sein. Ein erster Fuß 3 ist dann so gestaltet, dass ein Druck auf die Oberseite des Küchengeräts von dem Drucksensor 24 registriert werden kann.

Der Drucksensor 24 kann an einer Seite an dem Küchengerät 1 befestigt sein, so zum Beispiel mit dem Küchengerät 1 verschraubt sein. An der anderen Seite des Drucksensors 24 kann eine Kappe aus beispielsweise rutschfestem Material wie Gummi befestigt sein. Die Kappe kann beispielsweise durch eine Rastverbindung mit dem Drucksensor 24 verbunden sein. Die Kappe kann zum Schutz des Drucksensors 24 vorgesehen sein. Drucksensor 24 und Kappe können einen ersten Fuß 3 mit integriertem Drucksensor 24 bilden. Es ist aber auch möglich, dass keine Kappe vorhanden ist. Dann ist der Drucksensor 24 der erste Fuß 3. Auch dies ist als erster Fuß 3 mit integriertem Drucksensor 24 anzusehen.

Alternativ zu einem ersten Fuß 3 mit integriertem Drucksensor können beispielsweise mehrere erste Füße 3 an nur einem Drucksensor mittelbar oder unmittelbar befestigt sein, damit das Küchengerät 1 als Waage genutzt werden kann.

Die Figur 5 zeigt ein Beispiel für ein Küchengerät 25, welches aus einem wie in der Figur 1 gezeigten Gerät 1 und einem Gefäß bzw. Topf 26 zusammengesetzt ist. Um Nahrungsmittel in dem Topf 26 mischen und/oder zerkleinern zu können, kann im Topf 26 ein Misch- und/oder Schneidwerkzeug 27 vorhanden sein. Das Misch- und/oder Schneidwerkzeug 27 kann beispielsweise durch den Motor 19 über eine Welle 28 angetrieben werden.

Der Topf 26 kann eine Heizeinrichtung 29 umfassen. Die Heizeinrichtung 29 kann beispielsweise im Grund des Topfes 26 angeordnet sein. Durch die Heizeinrichtung 29 kann der Innenraum des Topfes 26 für die Zubereitung eines Nahrungsmittels erhitzt der Fuß kann Druckübertragung Komponenten 35 und 36 umfassen, um einen Druck gleichmäßig von der Kappe 31 weiterzuleiten. Die Druckübertragungselemente 35 und 36 grenzen mittelbar oder unmittelbar an den Innenraum der Kappe an. Die Heizeinrichtung 29 kann beispielsweise ein oder mehrere elektrische Heizleiter umfassen, über die der Innenraum des Topfes 26 für die Zubereitung eines Nahrungsmittels erhitzt werden kann. Die Heizeinrichtung 29 kann eine Dickschichtheizeinrichtung sein. Die Heizeinrichtung 29 kann eine induktive Heizeinrichtung sein. Das Küchengerät 25 ist dann so eingerichtet, das die Heizeinrichtung 29 über Induktion erhitzt werden kann. Beispielsweise über einen Druck- und/oder Drehknopf 30 des Bedienfeldes 13 kann die Drehgeschwindigkeit des Motors 19 eingestellt werden. Beispielsweise über den Druck- und/oder Drehknopf 30 des Bedienfeldes 13 kann die Heizleistung der Heizeinrichtung 29 eingestellt werden. Es ist aber alternativ oder ergänzend möglich, dass über ein berührungsempfindliches Display des Bedienfeldes 13 solche Einstellungen vorgenommen werden können.

In der Figur 6 wird ein erster Schuh 3 mit einem Drucksensor 24 im Schnitt gezeigt. Der Schuh 3 umfasst an seiner Unterseite eine Kappe 31. Ein Verbindungsglied 32 kann beispielsweise mit einer Schraube 33 an dem Drucksensor 24 befestigt sein. Die Kappe 31 kann einen Steg umfassen, der sich nach oben erstreckt und der in einem Kopf 34 endet. In eine beispielsweise umlaufende Nut unterhalb des Kopfes 34 kann ein Bügel 35 hineinreichen. Der Bügel 35 kann außerdem auf dem Verbindungsglied 32 aufliegen, wodurch die Kappe 31 mit dem Verbindungsglied 32 verbunden werden kann.

Eine Druckübertragungselement 35 kann an der Innenseite der Kappe 31, wie in der Figur 6 gezeigt, anliegen, um eine gleichmäßige Druckübertragung von der Kappe 31 auf den Drucksensor 24 sicherzustellen. Das Druckübertragungselement 35 kann aus einem Material mit größerer Festigkeit im Vergleich zum Material der Kappe 31 bestehen, um dies erreichen zu können.

Zusätzlich kann eine Lochscheibe 36 vorhanden sein, die auf dem Druckübertragungselement 35 aufliegen kann. Die Lochscheibe 36 kann durch einen beispielweise zylinderförmigen Abschnitt des Verbindungsglieds 32 kontaktiert sein, um so den Druck von der Kappe 31 auf den Drucksensor 24 übertragen zu können.

Die Kappe 31 kann alternativ durch Stoffschluss befestigt sein. Die Kappe 31 kann beispielsweise angespritzt worden sein.

## Patentansprüche

1. Küchengerät (1, 25) mit einem Boden (2), mit an der Unterseite des Bodens (2) vorhandenen ersten Füßen (3) für ein Aufstellen des Küchengeräts (1, 25) auf einen ebenen Untergrund, wobei die ersten Füße (3) in einer Ebene (4) unterhalb des Bodens (2) enden,
mit an der Unterseite des Bodens (2) vorhandenen mehreren zweiten Füßen (6) für ein Abstützen eines gekippten Zustands des Küchengeräts (1, 25), wobei die mehreren zweiten Füße (6) vor der Ebene (4) enden,
wobei erste und zweite Füße (3, 6) entlang eines bogenförmigen Rands (8) des Bodens (2) oder parallel zu einem bogenförmigen Rand (8) des Bodens (2) angeordnet sind und sich ein zweiter Fuß (6) zwischen zwei ersten Füßen (3) befindet,
**dadurch gekennzeichnet, dass**
der Boden (2) eine langgestreckte Form mit zwei langen Seiten (11) und im Vergleich dazu zwei schmalen Stirnseiten (8, 12) umfasst, wobei ein Bedienfeld (13) des Küchengeräts (1, 25) bei einer schmalen Stirnseite (12) angeordnet ist,
wobei die schmale Stirnseite (12), bei der das Bedienfeld (13) angeordnet ist, geradlinig verläuft und mit einer langen, geradlinig verlaufenden Seite (11) einen rechten Winkel einschließt.

2. Küchengerät (1, 25) nach dem vorhergehenden Anspruch, **dadurch gekennzeichnet, dass** die ersten und/oder die zweiten Füße (3, 6) beim Rand des Bodens (2) angeordnet sind.

3. Küchengerät (1, 25) nach einem der vorhergehenden Ansprüche, **dadurch gekennzeichnet, dass** ein zweiter Fuß (6) mit zwei benachbarten ersten Füßen (3) in Aufsicht auf den Boden (2) gesehen ein Dreieck (9) bilden.

4. Küchengerät (1, 25) nach einem der vorhergehenden Ansprüche, **dadurch gekennzeichnet, dass** die ein oder mehreren zweiten Füße (6) vom Boden (2) des Küchengeräts (1, 25) schräg nach außen abstehen.

5. Küchengerät (1, 25) nach einem der vorhergehenden Ansprüche, **dadurch gekennzeichnet, dass** ein oder mehrere zweite Füße (6) eine langgestreckte Aufstellfläche (15) am freien, unteren Ende aufweisen, die in Aufsicht auf den Boden (2) gesehen von innen nach außen verläuft.

6. Küchengerät (1, 25) nach einem der vorhergehenden Ansprüche, **dadurch gekennzeichnet, dass** ein oder mehrere zweite Füße (6) sich vom Boden (2) aus gesehen nach außen verjüngen.

7. Küchengerät (1, 25) nach einem der vorhergehenden Ansprüche, **dadurch gekennzeichnet, dass** die Aufstellfläche (15) eines zweiten Fußes (6), die im Fall einer Kippbewegung den Untergrund kontaktieren kann, oval ist.

8. Küchengerät (1, 25) nach einem der vorhergehenden Ansprüche, **dadurch gekennzeichnet, dass** der Schwerpunkt (14) des Küchengeräts (1, 25) sich mittig zwischen den ersten Füßen (3) befindet.

9. Küchengerät (1, 25) nach einem der vorhergehenden Ansprüche, **dadurch gekennzeichnet, dass** sich der Schwerpunkt (14) des Küchengeräts (1, 25) von der Seite (12) mit dem Bedienfeld (13) aus gesehen in der hinteren Hälfte des Bodens (2) oder im hinteren Drittel des Bodens (2) befindet.

10. Küchengerät (1, 25) nach einem der vorhergehenden Ansprüche, **dadurch gekennzeichnet, dass** ein Drucksensor (24) für eine Gewichtsmessung vorhanden ist, sodass mithilfe von zumindest einem ersten Fuß (3), nicht aber mithilfe von ein oder mehreren zweiten Füßen (6), ein Gewicht gemessen werden kann.

11. Küchengerät (1, 25) nach einem der vorhergehenden Ansprüche, **dadurch gekennzeichnet, dass** der Boden (2) eine Griffmulde (16) mit Lüftungsöffnungen (17) umfasst, und Füße (3, 6) zumindest teilweise mit der Griffmulde überlappen.

12. Küchengerät (25) nach einem der vorhergehenden Ansprüche, **dadurch gekennzeichnet, dass** das Küchengerät (25) einen Elektromotor (19), einem Gefäß (26) und ein Misch- und/oder Schneidwerkzeug (27) im Gefäß (26) umfasst, wobei das Misch- und/oder Schneidwerkzeug (27) über eine Welle (28) durch den Motor (19) angetrieben werden kann.

## Claims

1. Kitchen appliance (1, 25) having a base (2), having first feet (3) present on the underside of the base (2) for placing the kitchen appliance (1, 25) on a level ground, wherein the first feet (3) terminate in a plane (4) below the base (2),
having a plurality of second feet (6) present on the underside of the base (2) for supporting a tilted state of the kitchen appliance (1, 25), wherein the plurality of second feet (6) terminate before the plane (4),
wherein first and second feet (3, 6) are arranged along an arcuate edge (8) of the base (2) or parallel to an arcuate edge (8) of the base (2) and a second foot (6) is located between two first feet (3),
**characterised in that** the base (2) comprises an elongated shape with two long sides (11) and, in comparison thereto, two narrow end faces (8, 12), wherein a control panel (13) of the kitchen appliance (1, 25) is arranged at a narrow end face (12),
wherein the narrow end face (12) at which the control panel (13) is arranged extends in a straight line and encloses a right angle with a long, straight-extending side (11).

2. Kitchen appliance (1, 25) according to the preceding claim, **characterised in that** the first and/or the second feet (3, 6) are arranged at the edge of the base (2).

3. Kitchen appliance (1, 25) according to one of the preceding claims, **characterised in that** a second foot (6) with two adjacent first feet (3), as seen in plan view of the base (2), form a triangle (9).

4. Kitchen appliance (1, 25) according to one of the preceding claims, **characterised in that** the one or more second feet (6) project obliquely outwards from the base (2) of the kitchen appliance (1, 25).

5. Kitchen appliance (1, 25) according to one of the preceding claims, **characterised in that** one or more second feet (6) have an elongated placement surface (15) at the free, lower end, which extends from the inside to the outside as seen in plan view of the base (2).

6. Kitchen appliance (1, 25) according to one of the preceding claims, **characterised in that** one or more second feet (6) taper outwards as seen from the base (2).

7. Kitchen appliance (1, 25) according to one of the preceding claims, **characterised in that** the placement surface (15) of a second foot (6), which can contact the ground in the event of a tilting movement, is oval.

8. Kitchen appliance (1, 25) according to one of the preceding claims, **characterised in that** the centre of gravity (14) of the kitchen appliance (1, 25) is located centrally between the first feet (3).

9. Kitchen appliance (1, 25) according to one of the preceding claims, **characterised in that** the centre of gravity (14) of the kitchen appliance (1, 25), as seen from the side (12) with the control panel (13), is located in the rear half of the base (2) or in the rear third of the base (2).

10. Kitchen appliance (1, 25) according to one of the preceding claims, **characterised in that** a pressure sensor (24) for weight measurement is present, so that a weight can be measured by means of at least one first foot (3), but not by means of one or more second feet (6).

11. Kitchen appliance (1, 25) according to one of the preceding claims, **characterised in that** the base (2) comprises a grip recess (16) with ventilation openings (17), and feet (3, 6) at least partially overlap with the grip recess.

12. Kitchen appliance (25) according to one of the preceding claims, **characterised in that** the kitchen appliance (25) comprises an electric motor (19), a vessel (26) and a mixing and/or cutting tool (27) in the vessel (26), wherein the mixing and/or cutting tool (27) can be driven by the motor (19) via a shaft (28).

## Revendications

1. Appareil de cuisine (1, 25) comportant un fond (2), avec des premiers pieds (3) prévus sur la face inférieure du fond (2) pour poser l'appareil de cuisine (1, 25) sur un support plan, les premiers pieds (3) se terminant dans un plan (4) situé en dessous du fond (2),
comportant plusieurs seconds pieds (6) situés sur la face inférieure du fond (2) et destinés à soutenir l'appareil de cuisine (1, 25) lorsqu'il est incliné, lesdits plusieurs seconds pieds (6) se terminant en avant du plan (4),
les premiers et seconds pieds (3, 6) étant disposés le long d'un bord courbe (8) du fond (2) ou parallèlement à un bord courbe (8) du fond (2), et un second pied (6) étant situé entre deux premiers pieds (3),
**caractérisé en ce que** le fond (2) présente une forme allongée avec deux côtés longs (11) et, par rapport à ceux-ci, deux côtés frontaux étroits (8, 12), un panneau de commande (13) de l'appareil de cuisine (1, 25) étant disposé au niveau d'un côté frontal étroit (12),
la face frontale étroite (12) sur laquelle est disposé le panneau de commande (13) s'étendant en ligne droite et formant un angle droit avec un côté long (11) s'étendant en ligne droite.

2. Appareil de cuisine (1, 25) selon la revendication précédente, **caractérisé en ce que** les premiers et/ou les seconds pieds (3, 6) sont disposés sur le bord de la base (2).

3. Appareil de cuisine (1, 25) selon l'une des revendications précédentes, **caractérisé en ce qu'**un deuxième pied (6) forme, avec deux premiers pieds (3) adjacents, un triangle (9) vu en vue de dessus sur le fond (2).

4. Appareil de cuisine (1, 25) selon l'une des revendications précédentes, **caractérisé en ce que** le ou les seconds pieds (6) font saillie obliquement vers l'extérieur à partir du fond (2) de l'appareil de cuisine (1, 25).

5. Appareil de cuisine (1, 25) selon l'une des revendications précédentes, **caractérisé en ce qu'**un ou plusieurs seconds pieds (6) présentent, à leur extrémité inférieure libre, une surface d'appui allongée (15) qui, vue en plan par rapport au sol (2), s'étend de l'intérieur vers l'extérieur.

6. Appareil de cuisine (1, 25) selon l'une des revendications précédentes, **caractérisé en ce qu'**un ou plusieurs seconds pieds (6) s'effilent vers l'extérieur lorsqu'on les observe depuis le sol (2).

7. Appareil de cuisine (1, 25) selon l'une des revendications précédentes, **caractérisé en ce que** la surface d'appui (15) d'un deuxième pied (6), susceptible d'entrer en contact avec le sol en cas de mouvement de basculement, est ovale.

8. Appareil de cuisine (1, 25) selon l'une des revendications précédentes, **caractérisé en ce que** le centre de gravité (14) de l'appareil de cuisine (1, 25) est situé au milieu entre les premiers pieds (3).

9. Appareil de cuisine (1, 25) selon l'une des revendications précédentes, **caractérisé en ce que** le centre de gravité (14) de l'appareil de cuisine (1, 25), vu depuis le côté (12) comportant le panneau de commande (13), se situe dans la moitié arrière du fond (2) ou dans le tiers arrière du fond (2).

10. Appareil de cuisine (1, 25) selon l'une des revendications précédentes, **caractérisé en ce qu'**il comporte un capteur de pression (24) destiné à la mesure du poids, de sorte qu'un poids puisse être mesuré à l'aide d'au moins un premier pied (3), mais non à l'aide d'un ou de plusieurs seconds pieds (6).

11. Appareil de cuisine (1, 25) selon l'une des revendications précédentes, **caractérisé en ce que** la base (2) comprend une poignée encastrée (16) dotée d'orifices d'aération (17), et **en ce que** les pieds (3, 6) recouvrent au moins partiellement la poignée encastrée.

12. Appareil de cuisine (25) selon l'une des revendications précédentes, **caractérisé en ce que** l'appareil de cuisine (25) comprend un moteur électrique (19), un récipient (26) et un outil de mélange et/ou de découpe (27) dans le récipient (26), l'outil de mélange et/ou de découpe (27) pouvant être entraîné par le moteur (19) via un arbre (28).
